# DEMANDE DE BREVET EUROPEEN

(11) **EP 0 566 458 A1**
(43) Date de publication de la demande: **20.10.1993**
(21) Numéro de dépôt: 93400931.7
(22) Date de dépôt: 09.04.1993
(51) Int. Cl.: B66B 11/04, F16H 57/02, B66D 1/28

(54) **Treuil reversible**

(30) Priorité: 14.04.1992 FR 9204577
(71) Demandeur: Prudhomme, Dominique, F-75004 Paris (FR)
(72) Inventeur: Prudhomme, Dominique, F-75004 Paris (FR)

(57) **Abrégé**

Ce treuil est notamment destiné à la manoeuvre d'un ascenseur, du type comportant un moteur électrique d'entraînement (2) dont l'arbre (3) se prolonge par une vis sans fin (4) apte à engrener tangentiellement une roue de réduction (5) à denture hélicoïdale logée dans un carter (6) pour former un réducteur de vitesse, ladite roue (5) se prolongeant axialement vers la droite ou vers la gauche par un arbre de commande (9) d'un élément d'enroulement externe (8) dont la position relative par rapport au moteur (2) qui lui est perpendicuclaire, est subordonnée à des paramètres d'encombrement de l'ensemble pour assurer sa logeabilité dans un espace donné.

Il se caractérise en ce qu'il comporte des moyens de fixation amovibles et réversibles de l'arbre de commande (9) de l'élément d'enroulement (8) par rapport à la roue hélicoïdale (5) de manière à pouvoir disposer ledit élément d'enroulement (8) à la demande, à droite ou à gauche, par rapport au moteur (2) indépendamment de la position relative de ce dernier.

## Description

La présente invention concerne un treuil motorisé, notamment destiné à la commande d'un ascenseur, du type comportant un moteur électrique d'entraînement dont l'arbre se prolonge par une vis sans fin apte à engrener tangentiellement avec une roue de réduction à denture hélicoïdale logée dans un carter pourformer un réducteur de vitesse, ladite roue se prolongeant axialement vers la droite ou vers la gauche par un arbre de commande d'un élément d'enroulement externe dont la position relative par rapport au moteur qui lui est perpendicuclaire, est subordonnée à des paramètres d'encombrement de l'ensemble pour assurer sa logeabilité dans un espace donné.

Dans les treuils connus de ce type, dans leur application particulière aux ascenseurs, le problème majeur réside dans leur logeabilité dans un espace imposé.

En effet, les emplacements qui leur sont réservés, notamment dans les immeubles anciens, sont relativement exigus et ne sont pas compatibles avec l'encombrement relativement important de ces treuils. Le problème de l'encombrement est essentiellement lié à la disposition de l'élément d'enroulement externe, car si le moteur, le réducteur de vitesse et éventuellement un volant d'inertie, sont disposés en ligne, il n'en est pas de même pour l'élément d'enroulement précité qui s'étend selon un axe perpendiculaire à cet alignement.

De manière à remédier à cet inconvénient il est connu de proposer des treuils du type précité conçus pour comporter un élément d'enroulement à gauche ou à droite selon un choix prédéterminé. Pour cela, lors de la réalisation du réducteur, l'on prévoit de prolonger axialement la roue de réduction, par un arbre de commande de l'élément d'enroulement, s'étendant vers la droite ou vers la gauche de ladite roue, d'où par rapport au moteur.

On comprend aisément qu'une telle solution, si elle résoud un problème, elle en crée un autre, à savoir la nécessité de concevoir et de réaliser deux types de treuils l'un dit "à gauche" et l'autre dit "à droite" pour faire face aux deux cas de figures pouvant être rencontrés sur le terrain.

Il va de soi que cela entraîne un stockage prévisionnel qui ne peut être qu'approximatif, car il n'est pas possible de connaître à l'avance les situations que l'on va rencontrer ultérieurement.

Cela entraîne par conséquent un stockage des deux types de treuils pouvant s'avérer être d'une quantité inadaptée pour l'un d'eux en fonction de la demande, d'où une mauvaise gestion du stock.

La présente invention a pour but de remédier à ces inconvénients et concerne à cet effet un treuil motorisé, notamment destiné à la commande d'un ascenseur, du type comportant un moteur électrique d'entraînement dont l'arbre se prolonge par une vis sans fin apte à engrener tangentiellement avec une roue de réduction à denture hélicoïdale logée dans un carter pour former un réducteur de vitesse, ladite roue se prolongeant axialement vers la droite ou vers la gauche par un arbre de commande d'un élément d'enroulement externe dont la position relative par rapport au moteur qui lui est perpendiculaire, est subordonnée à des paramètres d'encombrement de l'ensemble pour assurer sa logeabilité dans un espace donné, caractérisé en ce qu'il comporte des moyens de fixation amovibles et réversibles de l'arbre de commande de l'élément d'enroulement par rapport à la roue hélicoïdale de manière à pouvoir disposer ledit élément d'enroulement à la demande, à droite ou à gauche, par rapport au moteur indépendamment de la position relative de ce dernier.

De cette manière le stockage et la gestion sont limités à un seuil type de treuil grâce à la reversibilité de l'élément d'enroulement s'effectuant par une opération mécanique simple, en fonction de la situation rencontrée.

L'invention sera mieux comprise et d'autres caractéristiques de celle-ci seront mises en évidence à l'aide de la description qui suit, en référence aux dessins schématiques annexés, illustrant, à titre d'exemple non limitatif, comment l'invention peut-être réalisée et dans lesquels:
- la figure 1 représente en vue de dessus un treuil muni d'un élément d'enroulement réversible selon l'invention;
- la figure 2 est une vue en coupe selon la ligne II-II de la figure 1;

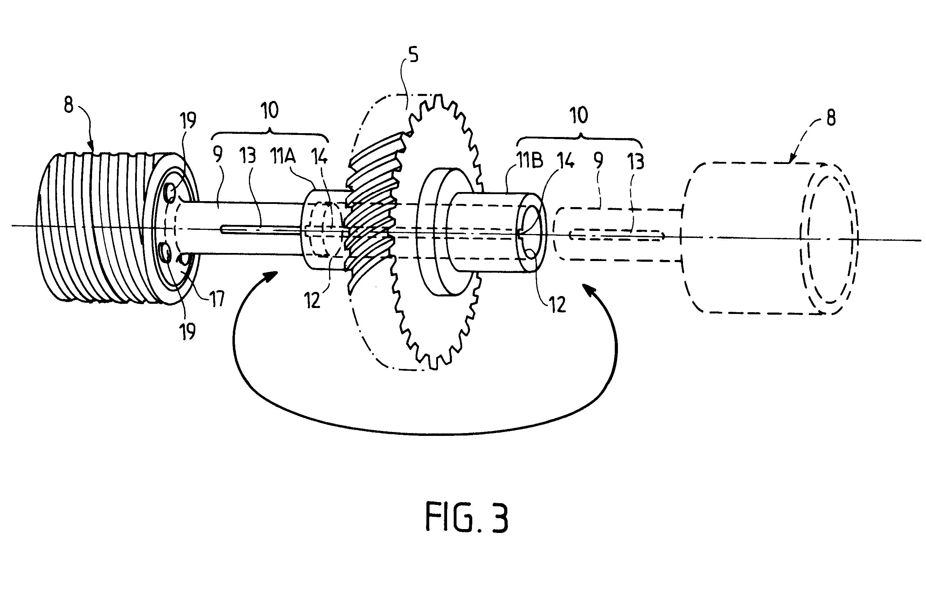

- la figure 3 est une vue en perspective éclatée d'une roue de réduction selon l'invention, en cours de montage d'un élément d'enroulement.

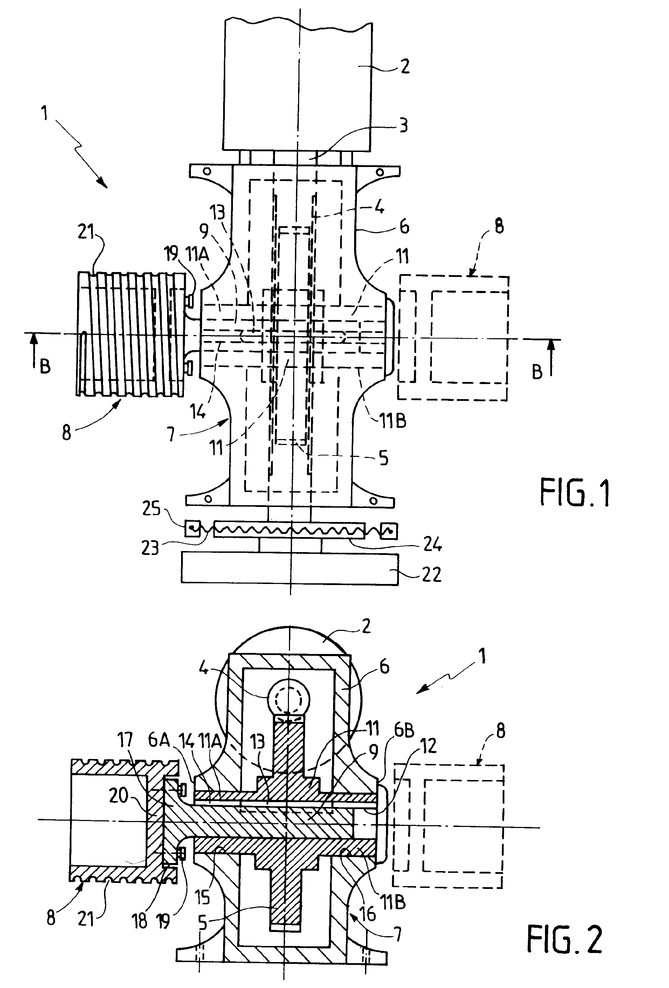

Le treuil 1 désigné dans son ensemble et représenté sur les figures 1 et 2 est particulièrement destiné à la commande d'un ascenseur (non représenté).

Il est constitué de manière connue d'un moteur d'entraînement 2 dont l'arbre 3 se prolonge par une vis sans fin 4 apte à engrener tangentiellement avec une roue de réduction 5 à denture hélicoïdale, logée dans un carter 6 pour former un réducteur de vitesse 7, interposé entre le moteur 2 et un élément d'enroulement externe 8, en l'occurrence un tambour connu en soi, supporté par l'intermédiaire d'un tourteau dans une rainure hélicoïdale 21 duquel élément 8 s'enroule un ou plusieurs câbles de suspension d'une cabine d'ascenseur. Bien entendu, il pourrait s'agir également d'une poulie.

L'élément d'enroulement ou tambour 8 est disposé à l'extrémité sortante d'un arbre de commande 9 prolongeant axialement vers la droite ou vers la gauche ladite roue de réduction 5.

L'arbre de commande 9 est situé dans un plan parallèle au plan de la vis sans fin 4 et s'étend dans une direction perpendiculaire à cette dernière, vers la droite ou vers la gauche, déterminant ainsi la position relative du tambour 8 ou d'une poulie (non représentée) par rapport au moteur 2, qui lui est conséquemment perpendiculaire, ladite position étant subordonnée à des paramètres d'encombrement de l'ensemble pour assurer sa logeabilité dans un espace donné.

Selon l'invention, le treuil 1 comporte des moyens de fixation amovibles et réversibles 10 de l'arbre de commande 9 du tambour 8 ou poulie par rapport à la roue de réduction 5, de manière à pouvoir disposer le tambour 8, à droite ou à gauche, à la demande, par rapport au moteur 2, indépendamment de la position relative de ce dernier.

Les moyens de fixation amovibles et reversibles 10 de l'arbre de commande 9 du tambour 8 ou poulie sont constitués par un manchon axial 11 solidaire de la roue hélicoïdale 5 et s'étendant de part et d'autre de celle-ci de manière symétrique, lequel manchon 11 est traversé de part en part, par un alésage axial 12 correspondant au diamètre dudit arbre de commande 9 de manière à permettre indifféremment l'introduction de ce dernier dans l'alésage 12 par l'extrémité droite ou gauche du manchon 11, puis une solidarisation par l'intermédiaire de moyens d'immobilisation.

Les moyens d'immobilisation de l'arbre de commande 9 dans le manchon 11 sont constitués par une clavette 13 logée dans un évidement correspondant ménagé sur une génératrice de l'arbre 9 et apte à s'engager par coulissement dans une rainure correspondante 14 ménagée dans l'alésage 12 du manchon 11.

Préférentiellement, le manchon 11 est obtenu solidairement de la roue hélicoïdale de réduction 5, par moulage de bronze, mais bien entendu des bagues obtenues, dans ce même matériau pourraient aussi être rapportées aux extrémités partantes 11A, 11B dudit manchon qui serait alors réalisé dans un matériau moins noble.

Les extrémités 11A, 11B du manchon 11 de la roue hélicoïdale 5 sont supportés par des paliers 15, 16 ménagés respectivement sur chaque face 6A, 6B du carter 6 du réducteur 7 qui les renferme, le palier 6B opposé à celui 6A en regard du tambour 8 ou poulie constituant un contre-palier apte à permettre l'augmentation de la charge dudit élément d'enroulement 8.

Comme représenté sur les figures, le tambour 8 ou poulie est relié à l'arbre de commande 9 de manière amovible par l'intermédiaire d'une embase élargie 17 dit "tourteau" logée dans un évidement borgne correspondant 18 et traversée par des vis de fixation 19 se vissant dans une paroi 20 de fond du tambour 8.

Un autre avantage de l'invention réside dans le fait de pouvoir prolonger l'arbre de commande 9 par un contre-palier supplémentaire (non représenté) afin de pouvoir augmenter la charge sur ledit arbre. Un tel contrepalier est identique qu'il soit destiné à un élément d'enroulement 8 en forme de tambour ou de poulie.

Ainsi, avec un treuil selon l'invention et un arbre prévu avec contre-palier non solidaire, il est possible de couvrir une gamme d'ascenseur allant de 180 kg à 1 500 kg de charge utile, avec un tambour ou poulie situé indifféremment à droite ou à gauche.

Il est également à préciser qu'un volant d'inertie 22, connu en soi, est prévu dans l'axe du moteur2 ainsi qu'un électrofrein 25 apte à agir sur un tambour de frein 24 par l'intermédiaire d'un organe élastique de serrage 23 agissant positivement lors d'une coupure de courant électrique.

## Revendications

1. Treuil motorisé (1), notamment destiné à la manoeuvre d'un ascenseur, du type comportant un moteur électrique d'entraînement (2) dont l'arbre (3) se prolonge par une vis sans fin (4) apte à engrener tangentiellement avec une roue de réduction (5) à denture hélicoïdale logée dans un carter (6) pour former un réducteur de vitesse, ladite roue (5) se prolongeant axialement vers la droite ou vers la gauche par un arbre de commande (9) d'un élément d'enroulement externe (8) dont la position relative par rapport au moteur (2) qui lui est perpendicuclaire, est subordonnée à des paramètres d'encombrement de l'ensemble pour assurer sa logeabilité dans un espace donné, caractérisé en ce qu'il comporte des moyens de fixation amovibles et réversibles (10) de l'arbre de commande (9) de l'élément d'enroulement (8) par rapport à la roue hélicoïdale (5) de manière à pouvoir disposer ledit élément d'enroulement (8) à la demande, à droite ou à gauche, par rapport au moteur (2) indépendamment de la position relative de ce dernier.

2. Treuil selon la revendication 1, caractérisé en ce que les moyens de fixation amovibles et reversibles (10) de l'arbre de commande (9) de l'élément d'enroulement (8) sont constitués par un manchon axial (11) solidaire de la roue hélicoïdale (5) et s'étendant de part et d'autre de celle-ci de manière symétrique, lequel manchon (11) est traversé de part en part, par un alésage axial (12) correspondant au diamètre dudit arbre de commande (9) de manière à permettre indifféremment l'introduction de ce dernier dans l'alésage (12) par l'extrémité droite ou gauche du manchon (11), puis une solidarisation par l'intermédiaire de moyens d'immobilisation (13, 14).

3. Treuil selon la revendication 1, caractérisé en ce que les moyens d'immobilisation (13, 14) de l'arbre de commande (9) dans le manchon (11) sont constitués par une clavette (13) logée dans un évidement correspondant ménagé sur une génératrice de l'arbre (9) et apte à s'engager par coulissement dans une rainure correspondante (14) ménagée dans l'alésage (12) du manchon (11).

4. Treuil selon la revendication 1 ou 2, caractérisé en ce que les extrémités (11A, 11 B) du manchon (11) de la roue hélicoïdale (5) sont supportés par des paliers (15,16) ménagés respectivement sur chaque face (6A, 6B) du carter (6) du réducteur (7) qui les renferme, le palier (6B) opposé à celui (6A) en regard de l'élément d'enroulement (8) constituant un contre-palier apte à permettre l'augmentation de la charge dudit élément d'enroulement (8).

5. Treuil selon l'une des revendications précédentes, caractérisé en ce que l'arbre de commande (9) est prolongé par un contrepalier supplémentaire, de manière telle à pouvoir augmenter la charge sur ledit arbre (9).
